# EUROPEAN PATENT APPLICATION

(11) **EP 1 983 729 A1**
(43) Date of publication of application: **22.10.2008**
(21) Application number: 08103143.7
(22) Date of filing: 28.03.2008
(51) Int. Cl.: H04M 1/247, H04M 1/2745, G06F 3/048, H04M 1/253

(54) **Graphical user interface for telecommunications application**

(30) Priority: 19.04.2007 KR 20070038383
(71) Applicant: Samsung Electronics Co., Ltd., Suwon-si Gyeonggi-do 443-742 (KR)
(72) Inventor: Hwang, Soon-hoon, Suji-gu, Yongin-si Gyeonggi-do (KR)
(74) Representative: Grootscholten, Johannes A.M.

(57) **Abstract**

An apparatus and method are provided. The apparatus includes a communication unit which communicates with an external communication apparatus; a user interface (UI) processor which processes an execution window and an item window having at least one item to be displayed; and a controller which controls the UI processor to transfer an item among the at least one item, which is selected in accordance with control information, to the execution window, which executes the transferred item, and controls the communication unit to perform communication corresponding to the selected item. The method includes generating an execution window and an item window that includes at least one item; transferring an item, which is selected from among the at least one item, in accordance with control information to the execution window, which executes the transferred item; and performing communication corresponding to the transferred item.

## Description

### BACKGROUND

### Field of the Invention

Apparatuses and methods consistent with the present invention relate to an electronic apparatus and a control method thereof, and more particularly, to an electronic apparatus having a built-in voice packet network call function of a Voice over Internet Protocol (VoIP) call function, and a control method thereof.

### Description of the Related Art

Recently, phones using VoIP are being developed in large numbers. However, a hardware configuration of the VoIP phones is similar to that of an existing phone. A software phone is also being developed, but only with a configuration level achieved by softwarizing the hardware configuration.

Accordingly, the phone functions of the softwarized phone only correspond to those of a phone implemented only by hardware. For example, in the case of a hardware phone, a drag and drop function cannot be used and other various and complicated functions (e.g., a conference call function, a transfer call function, and a forward call function) cannot be supported.

### SUMMARY

Accordingly, it is an aspect of the present invention to provide an electronic apparatus and a control method thereof by which a user can conveniently use an Internet phone function by realizing a software-based Internet phone function in a display apparatus having a built-in VoIP function.

In addition, it is another aspect of the present invention to provide an electronic apparatus and a control method thereof providing a hardware-based Internet phone function by software to thereby provide a user-attractive, intuitive, and individual user interface.

According to an aspect of the present invention, there is provided an electronic apparatus including a communication unit which communicates with an external communication apparatus; a user interface (UI) processor which processes an item window having at least one item to be displayed and an execution window which executes the item; and a controller which controls the UI processor to transfer the item selected in accordance with control information to the execution window, and controls the communication unit to perform communication corresponding to the selected item if the selected item is transferred to the execution window.

The item may include a communication remote party to communicate with the external communication apparatus and a communication method to be used for communication with the communication remote party.

The communication method may include at least one of an audio call, a video/audio call, a conference call, and an instant message.

The controller may control the UI processor to generate a sub-window in the execution window, the sub-window corresponding to a communication remote party that is selected and transferred to the execution window.

The controller may control the UI processor to generate an instruction display to connect a plurality of sub-windows generated in the execution window according to the control information, and may control the communication unit to perform communication by using the communication method corresponding to a combination of the sub-windows that are connected by the instruction display.

The electronic apparatus may further include a storage unit which stores communication information corresponding to the executed item.

The communication information may include at least one of the communication method, the communication remote party, and a communication time.

The control information may include selection information to select the item and direction information to transfer the item.

The control information may include a drag and drop function.

The UI processor may further process an execution or stop display to execute or stop the item in the execution window, and the controller may control the communication unit to execute or stop communication with the external communication apparatus if the execution or stop display is selected.

The electronic apparatus may further include a display unit which displays the item window and the execution window.

According to another aspect of the present invention, there is provided a method including generating an item window that includes at least one item and an execution window that executes the item; transferring the item selected in accordance with control information to the execution window; and if the item is selected and transferred to the execution window, performing communication corresponding to the selected and transferred item.

The item may include a communication remote party to communicate with an external communication apparatus and a communication method to communicate with the communication remote party.

The communication method may include at least one of an audio call, a video/audio call, a conference call, an instant message, a forward call, and a transfer call.

If a communication remote party is selected and transferred to the execution window, the communication method may further include generating a sub-window corresponding to the communication remote party in the execution window.

The performing communication corresponding to the selected and transferred item may include generating an instruction display to connect a plurality of sub-windows generated in the execution window according to the control information; and performing communication by using the communication method corresponding to a combination of the sub-windows that are connected by the instruction display.

The control method may further include storing communication information corresponding to the executed item.

The communication information may include at least one of the communication method, the communication remote party, and a communication time.

The control information may include selection information to select the item and direction information to transfer the item.

The control information may include a drag and drop function.

The performing communication corresponding to the selected and transferred item may include generating an execution or stop display to execute or stop the item in the execution window; and if the execution or stop display is selected, execution or stop communication between the item and the external communication apparatus.

### BRIEF DESCRIPTION OF THE DRAWINGS

The above and other aspects of the prevent invention will become apparent and more readily appreciated from the following description of exemplary embodiments, taken in conjunction with the accompanying drawings, in which:
FIG. 1 is a control block diagram of an apparatus according to an exemplary embodiment of the present invention;
FIG. 2 illustrates an interface screen according to an exemplary embodiment of the present invention;
FIG. 3 is a control flowchart of an apparatus according to an exemplary embodiment of the present invention; and
FIG. 4A, 4B, and FIG. 4C are control flowcharts of an apparatus according to an exemplary embodiment of the present invention.

### DETAILED DESCRIPTION OF EXEMPLARY EMBODIMENTS

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures.

An electronic apparatus according to an exemplary embodiment of the present invention can communicate with an external communication apparatus and generate a user interface (UI), and can be realized as a monitor, a computer, a television (TV), or a personal digital assistant (PDA), which has a built-in VoIP communication protocol.

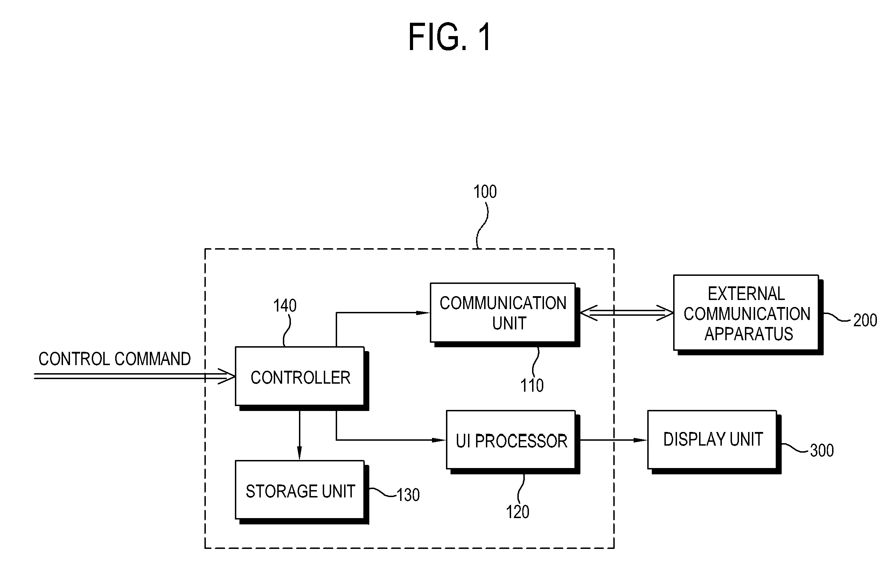

As shown in FIG. 1, an electronic apparatus 100 according to an exemplary embodiment of the present invention includes a communication unit 110 that communicates with an external communication apparatus 200, a UI processor 120, and a controller 140.

The communication unit 110 communicates with a remote party on the external communication apparatus 200, and can be provided as a VoIP gateway.

The VoIP gateway accesses a web phone service that allows access to a communication network such as a Public Switched Telephone Network (PSTN) or a mobile communication network according to control of the controller 140, and when a user inputs voice, the input voice signal is processed to a voice data packet signal using a voice streaming control process by an Internet phone program that is installed in a calling party terminal apparatus or provided by the web phone service, and the voice data packet signal is transmitted over the VoIP gateway. On the other end, a VoIP gateway disassembles the packet signal to restore the voice signal, and transmits the voice signal through a wired or wireless communication network.

When the user inputs an image according to control of the controller 140, the communication unit 110 transmits an input image signal and voice signal through the wired or wireless communication network. In addition, a text message can be transmitted to the communication remote party through the communication unit 110.

The UI processor 120 processes a graphic user interface (GUI) to be displayed on a display unit 300 according to control of the controller 140. The electronic apparatus 100 according to an exemplary embodiment of the present invention may include a display unit 300, or may display a GUI by using an external display unit.

The controller 140 controls the UI processor 120 to generate a UI to be displayed on the display unit 300 according to operating information, and controls the communication unit 110 to communicate with a communication remote party selected by the user through a selected communication method.

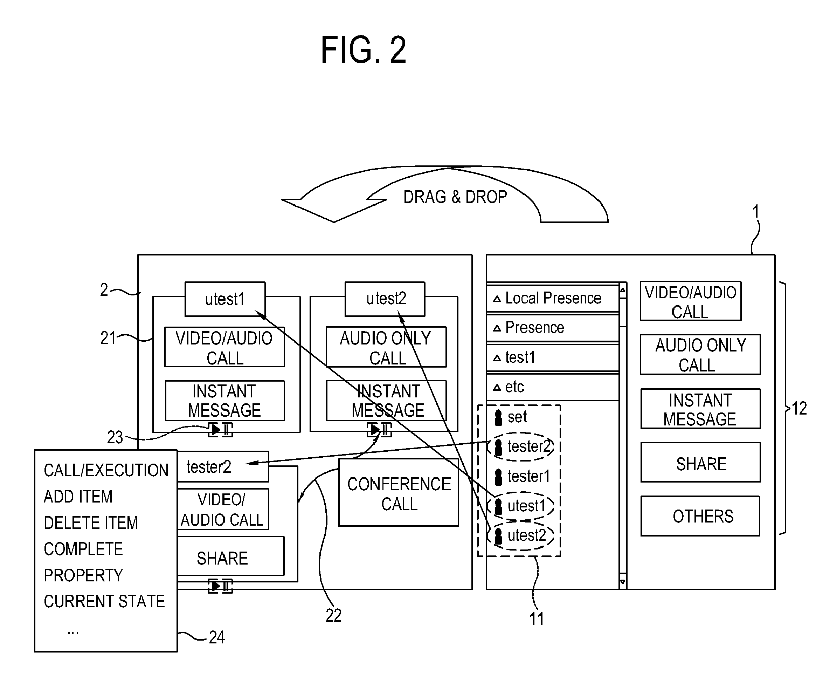

As shown in FIG. 2, the controller 140 controls the UI processor 120 to generate an item window 1 and an execution window 2. The item window 1 is an item pool that displays items to be executed, and includes items for a communication remote party 11 and a communication method 12.

In this case, the communication remote party 11 according to an exemplary embodiment of the present invention is a list of contacts which may receive a phone call or an Instant message through an Internet. The communication remote party 11 in an exemplary embodiment of the present invention is unit information that includes a home phone number, an office phone number, a mobile phone number, an e-mail address, a personal computer (PC) identification address together with a name of a receiving party, and is displayed in the form of a text and an icon.

The communication method 12 is information that includes methods to communicate with a communication remote party, and includes audio only call, video and audio call (i.e., video/audio call), instant message, conference call, call transfer, call forward and other known communication methods in the art.

Icons of the communication remote party 11 and the communication method 12 interlock with means for executing a communication means for each function, respectively. For example, a phone number icon interlocks with a communication unit that enables a mutual phone call through an Internet, and an instant message icon interlocks with a communication unit to generate and transmit or receive an instant message.

The execution window 2 is a window to execute items in the item pool, and the user can select an object in the item pool and transfer the selected object to the execution window 2 by using a drag and drop function.

In this case, when the communication remote party 11 in the item pool is dropped in the execution window 2, the controller 140 controls the UI processor 120 to generate a sub-window corresponding to the dropped communication remote party.

As shown in FIG. 2, if a communication remote party 11, named utest1, is dropped in the execution window 2, a sub-window 21 for the utest1 is generated on the execution window 2. In this case, if the user drags and drops a communication method 12 in the sub-window 21, the controller 140 controls the communication unit 110 to communicate with the communication remote party 11 of the sub-window 21 according to the communication method 12 displayed on the sub-window 21.

For example, as shown in FIG. 2, the user can communicate with the utest1 by using the video/audio call and instant message methods, communicate with utest2 by using the audio call and instant message methods, and perform the audio call and a sharing function with tester2.

According to an exemplary embodiment of the present invention, the controller 140 can control the UI processor 120 to generate an instruction display 22 on the execution window 2.

The instruction display 22 may be displayed as an arrow, and the user can move the arrow to connect the sub-windows 21 formed corresponding to the communication remote party 11.

The instruction display 22 can enable a conference call between the sub-window 21 and the communication remote party 11, or enable the user to perform a transfer call to transfer the current remote party 11 to another remote party 11. Here, the local party may be displayed as an icon on the execution window 2, or the execution window 2 may be set to the local party.

Accordingly, the local party and the remote party 11 on the execution window 2 are connected by using the instruction display 22 so that a call to the local party can be forwarded to a remote party 11 in the local party's absence. That is, a forward call function can be performed.

In addition, the controller 140 controls the UI processor 120 to generate an execution or stop display 23 in each sub-window 21 of the execution window 2.

The execution or stop display 23 may function as a short key performing a call or play function and a pause function of the sub-window 21.

The user can execute or stop communication by selecting the execution or stop display 23 of the sub-window 21, or by using a sub-menu 24 displayed by, for example, using right button of a mouse.

The sub-menu 24 may include information on communication and function execution with the communication remote party 11 on the sub-window 21, item deletion and addition, communication completion, sub-window properties, and a current communication state.

The electronic apparatus 100 according to an exemplary embodiment of the present invention may further include a storage unit 130, as shown in FIG. 1.

The controller 140 stores communication information of the sub-window 21 in the storage unit 130. The communication information may include a communication time and a communication method with the communication remote party 11, and the controller 140 may display the communication information stored in the storage unit 130 when the user, for example, selects a property on the sub-menu 24.

In addition, the controller 140 can control the UI processor 120 to generate the sub-window 21 including the corresponding communication properties according to a communication property of the communication remote party 11 dropped in the execution window 2.

Hereinafter, an execution method of an Internet call according to an exemplary embodiment of the present invention will be described in further detail with reference to the accompanying drawings.

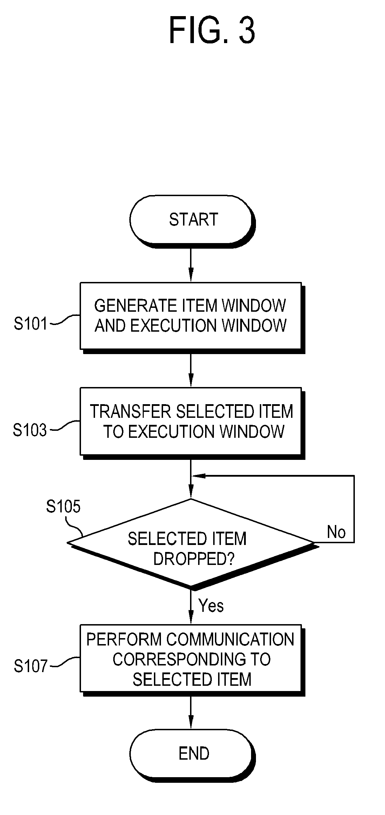

FIG. 3 is a control flowchart of an operation of the electronic apparatus 100 having a VoIP function installed therein according to an exemplary embodiment of the present invention.

The controller 140 controls the UI processor 120 to generate an item window and an execution window in operation S101. The user selects an item from the item window according to a control command such as a drag and drop, and transfers the selected item to the execution window in operation S103.

It is then determined whether the item transferred to the execution window is dropped in operation S105, and if it is determined that the item has been dropped, the controller 140 controls the communication unit 110 to perform communication by using a communication method corresponding to the dropped item in operation S107.

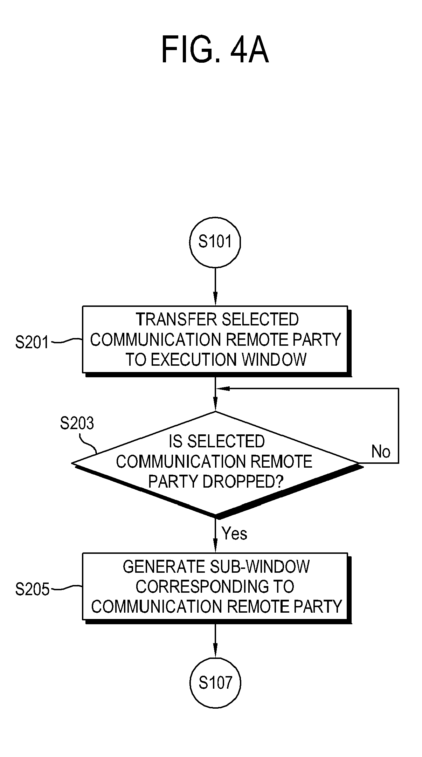

FIG. 4A to FIG. 4C are control flowcharts of the electronic apparatus 100 according to an exemplary embodiment of the present invention.

In FIG. 4A, after the item window and execution window are generated in operation S101, control is passed to operation S201. A user selects an communication remote party from the item window and transfers the selected communication remote party to the execution window in operation S201. It is determined whether the communication remote party is dropped in the execution window in operation S20. If it is determined that the communication remote party is dropped, the controller 140 controls the UI processor 120 to generate a sub-window corresponding to the dropped remote party in the execution window in operation S205.

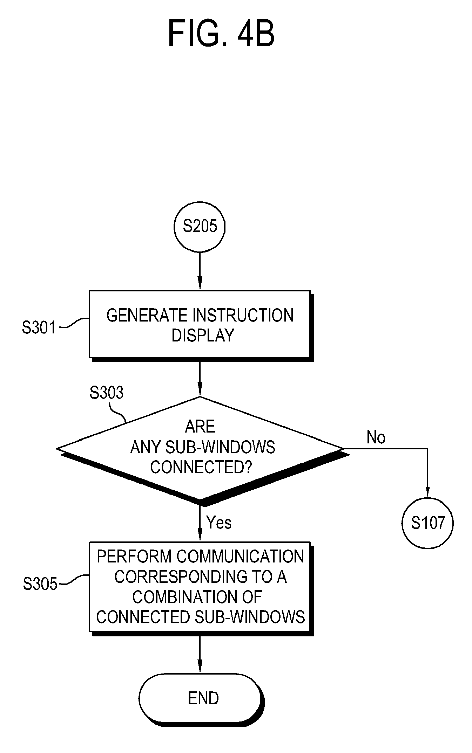

As shown in FIG. 4B, after the sub-window corresponding to the communication remote party is generated in operation S205, the controller 140 generates an instruction display capable of connecting respective sub-windows in the sub-window and corresponds to the communication remote party in operation S301. If it is determined that the user connects the sub-windows by using the instruction display in operation S303, the controller 140 controls the communication unit 110 to communicate with communication remote parties of the connected sub-windows according to a combination of the connection sub-windows in operation S305. In this case, a conference call can be performed so that the local party and a plurality of remote parties can be connected, and a transfer call can be performed so that a call between the local party and a remote party can be transferred to a second remote party by using the instruction display, and a forward call can be performed so that an incoming call from a remote party to the local party can be forwarded to a second remote party in the local party's absence.

If it is determined that no sub-windows are connected in operation S303, the controller 140 controls the communication unit 110 to communicate with a communication remote party selected by the user by using a selected communication method in operation S107.

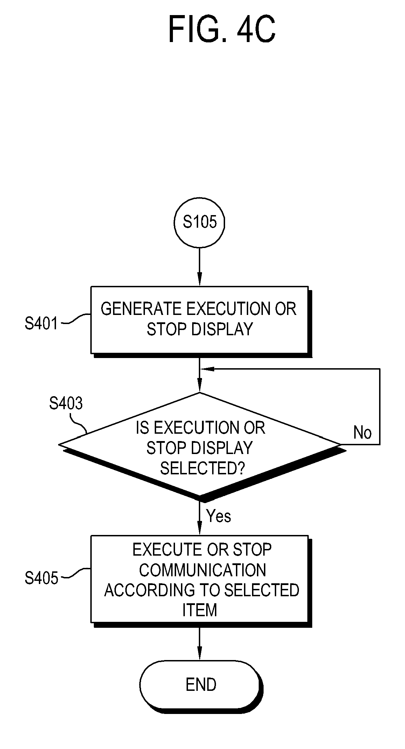

As shown in FIG. 4C, when an item is dropped to the execution window in operation S105, the controller 140 controls the UI processor 120 to generate an execution or stop display in the execution window in operation S401. It is determined whether the execution or stop display is selected by the user in operation S403. If it is determined that the execution or stop display is selected, the controller 140 controls the communication unit 110 to execute or stop communication according to the selected item in operation S405.

As described above, an electronic apparatus and a control method thereof by which a user can conveniently use an Internet phone function by realizing a software-based Internet phone function in a display apparatus having a VoIP function installed therein, can be provided.

In addition, a hardware-based Internet phone function can be provided by software to thereby provide a user-attractive, intuitive, and individual user interface.

A drag and drop function, which is a characteristic of Internet Windows, is applied to the Internet phone function, thereby improving convenience for the user interface.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. An apparatus comprising:
a communication unit which communicates with an external communication apparatus;
a user interface (UI) processor which processes an execution window and an item window having at least one item to be displayed; and
a controller which controls the UI processor to transfer an item among the at least one item, which is selected in accordance with control information, to the execution window, which executes the transferred item, and controls the communication unit to perform communication corresponding to the selected item.

2. The apparatus of claim 1, wherein the at least one item comprises a communication remote party to communicate with the external communication apparatus and a communication method used for communication with the communication remote party.

3. The apparatus of claim 2, wherein the communication method comprises at least one of an audio call, an audio and video call, a conference call, and an instant message.

4. The apparatus of claim 2, wherein, if a communication remote party is selected and transferred to the execution window, the controller controls the UI processor to generate a sub-window in the execution window, the sub-window corresponding to the communication remote party that is selected and transferred to the execution window.

5. The apparatus of claim 4, wherein the controller controls the UI processor to generate an instruction display to connect a plurality of sub-windows generated in the execution window according to the control information, and controls the communication unit to perform communication by using a communication method corresponding to a combination of the sub-windows that are connected by the instruction display.

6. The apparatus of claim 5, further comprising a storage unit which stores communication information corresponding to the executed item.

7. The apparatus of claim 6, wherein the communication information comprises at least one of the communication method, the communication remote party, and a communication time.

8. The apparatus of claim 1, wherein the control information comprises selection information to select the item and direction information to transfer the item.

9. The apparatus of claim 1, wherein the control information comprises a drag and drop function.

10. The apparatus of claim 1, wherein the UI processor further processes an execution or stop display to execute or stop the item in the execution window, and the controller controls the communication unit to execute or stop communication with the external communication apparatus if the execution or stop display is selected.

11. The apparatus of claim 1, further comprising a display unit which displays the item window and the execution window.

12. A method comprising:
generating an execution window and an item window that includes at least one item;
transferring an item, which is selected from among the at least one item, in accordance with control information to the execution window, which executes the transferred item; and
performing communication corresponding to the transferred item.

13. The method of claim 12, wherein the item comprises a communication remote party to communicate with an external communication apparatus and a communication method to communicate with the communication remote party.

14. The method of claim 13, wherein the communication method comprises at least one of an audio call, an audio and video call, a conference call, an instant message, a forward call, and a transfer call.

15. The method of claim 13, further comprising if a communication remote party is transferred to the execution window, generating a sub-window corresponding to the communication remote party in the execution window.

16. The method of claim 15, wherein the performing communication corresponding to the transferred item comprises:
generating an instruction display to connect a plurality of sub-windows generated in the execution window according to the control information; and
performing communication by using a communication method corresponding to a combination of the sub-windows that are connected by the instruction display.

17. The method of claim 16, further comprising storing communication information corresponding to the executed item.

18. The method of claim 17, wherein the communication information comprises at least one of the communication method, the communication remote party, and a communication time.

19. The method of claim 12, wherein the control information comprises selection information to select the item and direction information to transfer the item.

20. The method of claim 12, wherein the control information comprises a drag and drop function.

21. The method of claim 12, wherein the performing communication corresponding to the transferred item comprises:
generating an execution or stop display to execute or stop the item in the execution window; and
if the execution or stop display is selected, executing or stopping communication between the item and the external communication apparatus.
